# EUROPÄISCHE PATENTANMELDUNG

(11) **EP 0 678 244 A2**
(43) Veröffentlichungstag der Anmeldung: **25.10.1995**
(21) Anmeldenummer: 95105862.7
(22) Anmeldetag: 19.04.1995
(51) Int. Cl.: A23F 5/10

(54) **Verfahren und Einrichtung zur Behandlung von geröstetem, gemahlenem Kaffee**

(30) Priorität: 19.04.1994 DE 4413632
(71) Anmelder: Probat-Werke von Gimborn Maschinenfabrik GmbH, D-46446 Emmerich (DE)
(72) Erfinder: Finken, Hermann, Dipl.-Ing., D-47533 Kleve (DE); Jansen, Gerhard, NL-7041 JH s'Heerenberg (NL); von Gimborn, Carl Hans, D-46446 Emmerich (DE)
(74) Vertreter: Liska, Horst, Dr.-Ing.

(57) **Zusammenfassung**

Es wird ein Verfahren zur Behandlung von geröstetem, gemahlenem Kaffee vorgeschlagen, der in einer sauerstoffarmen Atmosphäre von einer Mahlstation über eine Entgasungsstation zu einer Verpackungsstation gefördert und dort portionsweise im wesentlichen luftdicht verpackt wird. Dabei ist vorgesehen, daß der gemahlene Kaffee in der Entgasungsstation mit CO₂-haltigen Gasen gespült wird, welche mit einem vorbestimmten Durchsatz in die Entgasungsstation eingeführt werden. Hierdurch kann das Abgasungsverhalten des gemahlenen Kaffees nahezu unterdrückt und dessen erforderliche Verweilzeit in der Entgasungsstation erheblich reduziert werden.

## Beschreibung

Die Erfindung betrifft ein Verfahren und eine Einrichtung zur Behandlung von geröstetem, gemahlenem Kaffee.

Herkömmlicherweise werden geröstete Kaffeebohnen in einer Mahlstation gemahlen und der gemahlene Kaffee sodann über eine Entgasungstation zu einer Verpackungsstation gefördert und dort portionsweise verpackt. Die Verpackung erfolgt bevorzugt durch Vakuum, um sogenannte Hartpackungen zu erzeugen. Diese stabilen und harten Hartpackungen bieten Schutz gegen Feuchtigkeits-, Sauerstoff- und Lichtzutritt. Es kommen aber auch alle anderen Verpackungsarten, wie sogenannte Weichpackungen, Verpackungen in Dosen und dergleichen, in Betracht.

Unter Anwesenheit von Sauerstoff kann der gemahlene Kaffee oxidieren, was seine Alterung beschleunigt und sein Aroma in kürzester Zeit derart verschlechtert, daß von einem Altgeschmack gesprochen werden kann. Aus diesem Grund wird seit langer Zeit versucht, den gemahlenen Kaffee auf seinem Weg von der Mahlstation zur Verpackungsstation von Sauerstoff weitestgehend zu isolieren. Es ist bekannt, die einzelnen Stationen und Förderstrecken einer Mahlkaffeeanlage im wesentlichen gasdicht auszuführen und darin eine sauerstoffarme Schutzgasatmosphäre zu erzeugen, in der der gemahlene Kaffee im wesentlichen ohne Sauerstoffzutritt hergestellt, transportiert und verpackt werden kann. Als Schutzgas kann CO₂, N₂ oder auch jedes andere geeignete Inertgas verwendet werden.

Kaffee hat die Eigenschaft, daß er nach dem Mahlen in nicht unerheblichen Mengen Abgase freisetzt, die überwiegend aus CO₂, CO und kaffeeigenen Aromastoffen bestehen. Er wird daher herkömmlicherweise in der Entgasungsstation für einige Zeit eingelagert, um ausreichend abgasen zu können. Zu kurze Abgasungszeiten können dazu führen, daß der gemahlene Kaffee in der Verpackung nachgast und aus Hartpackungen Weichpackungen werden oder sogenannte Bombagen entstehen. Bei den herkömmlichen Verfahren ist die erforderliche Verweilzeit in der Entgasungsstation recht lang. Sie beträgt - je nach Röstgrad und Körnung des gemahlenen Kaffees und auch nach Art der gewählten Verpackung - bis zu etwa 24 Stunden. Derartig lange Verweilzeiten bedingen Silos mit großer Speicherkapazität, um die langen Abgasungszeiten vor der Verpackungsstation einhalten zu können, sowie eine zeitversetzte Produktion.

Es wurde versucht, das Abgasen zu beschleunigen, indem dem gemahlenen Kaffee H₂O zugesetzt wurde, der gemahlene Kaffee komprimiert wurde oder die Silos mit N₂ geflutet wurden. Dies bewirkte jedoch keine merkliche Reduzierung der erforderlichen Abgasungszeiten und führte entweder zu einer Erhöhung der Produktionskosten oder zu einer Qualitätsverschlechterung des gemahlenen Kaffees.

Der Erfindung liegt die Aufgabe zugrunde, einen Weg aufzuzeigen, wie die Durchlaufzeit des gemahlenen Kaffees von der Mahlstation zur Verpackungsstation verkürzt werden kann und der gemahlene Kaffee dennoch so verpackt werden kann, daß er in den Packungen kaum mehr Gase abgibt und sein Aroma möglichst wie frisch gemahlener Kaffee behält.

Bei der Lösung dieser Aufgabe geht die Erfindung von einem Verfahren zur Behandlung von geröstetem, gemahlenem Kaffee aus, der in einer sauerstoffarmen Atmosphäre von einer Mahlstation über eine Entgasungsstation zu einer Verpackungsstation gefördert und dort portionsweise im wesentlichen luftdicht verpackt wird. Die Erfindung schlägt vor, daß der gemahlene Kaffee in der Entgasungsstation mit CO₂-haltigen Gasen gespült wird, welche mit einem vorbestimmten zeitbezogenen Volumen in die Entgasungsstation eingeführt werden.

Überraschenderweise kann durch die erfindungsgemäße Behandlung des gemahlenen Kaffees dessen Abgasungsverhalten nachhaltig beeinflußt werden. Es hat sich gezeigt, daß vom gemahlenen Kaffee bis zu 90 % weniger Abgase freigesetzt werden als bei herkömmlichen Verfahren. Das Abgasen wird nahezu unterdrückt, wobei die unterdrückende Wirkung der CO₂-Spülung insbesondere bei Vakuum-Verpackungen bis zum Aufbrühen vor dem Verzehr anhalten kann. Da der gemahlene Kaffee weniger Aromastoffe abgibt, bleibt er frischer und verliert seinen Geschmack nicht. Durch die weitestgehende Unterdrückung des Abgasens wird die erforderliche Verweilzeit des gemahlenen Kaffees in der Entgasungsstation erheblich reduziert. Geringere Silokapazitäten und eine nahezu fließende Produktion sind möglich.

Die erfindungsgemäße Durchspülung des gemahlenen Kaffees mit CO₂-haltigen Gasen kann zusätzlich oder, was nicht ausgeschlossen sein soll, auch alternativ in der Verpackungsstation durchgeführt werden, insbesondere wenn Weichpackungen zum Einsatz kommen sollen und die Entgasungsstation dann unter Umständen entfallen kann.

Besonders gute Ergebnisse werden erzielt, wenn in der Entgasungsstation und/oder in der Verpackungsstation eine Atmosphäre erzeugt wird, die mindestens 95 Vol%, besser 99 Vol%, noch besser 99,9 Vol% CO₂ enthält. Dabei wird der CO₂-Gehalt in der Entgasungsstation und/oder in der Verpackungsstation bevorzugt dadurch bestimmt, daß der Restsauerstoffgehalt in der den verpackten gemahlenen Kaffee umgebenden Atmosphäre auf weniger als 1 Vol%, besser weniger als 0,5 Vol%, am besten weniger als 0,1 Vol%, gedrückt wird. Der gemahlene Kaffee wird günstigerweise von der Mahlstation bis in die Packung unter einer derartigen CO₂-Atmosphäre gehalten, wobei es möglich ist, den Gehalt an Restsauerstoff in der Atmosphäre zu regeln, indem entsprechend einer gemessenen Regelabweichung CO₂ oder gegebenenfalls ein anderes Schutzgas zugeführt wird.

In weiterer Ausbildung der Erfindung wird vorgeschlagen, daß der gemahlene Kaffee eine vorbestimmte Zeit lang, insbesondere während zumindest eines großen Teils seiner Verweildauer in der Entgasungsstation, mit CO₂-haltigen Gasen gespült wird und daß das vorbestimmte zeitbezogene Volumen der CO₂-haltigen Gase zeitlich im wesentlichen konstant ist. Das vorbestimmte Volumen pro Zeit, also der Durchsatz, und die vorbestimmte Zeitdauer können je nach Zusammensetzung, Röstgrad, Kornfeinheit, Restfeuchte und Temperatur des gemahlenen Kaffees unterschiedlich sein. Es hat sich gezeigt, daß eine Spülung des gemahlenen Kaffees weniger als 6 Stunden lang, besser weniger als 2 Stunden lang, noch besser weniger als 0,25 Stunden lang, mit CO₂-haltigen Gasen ausreichend ist, um das Abgasen hinreichend reduzieren zu können. Dementsprechend kurz kann die erforderliche Verweilzeit des gemahlenen Kaffees in der Entgasungsstation bemessen werden. Als günstiger Wert für den Durchsatz der CO₂-haltigen Gase hat sich ein Bereich von 0,05 l/min bis 2 l/min, vorzugsweise von 0,2 l/min bis 1 l/min, je kg des in der Entgasungsstation verweilenden gemahlenen Kaffees erwiesen. Für eine gleichmäßige Durchspülung des gemahlenen Kaffees kann der Durchsatz auf seinen vorbestimmten Wert hin insbesondere kontinuierlich geregelt werden.

Das erfindungsgemäße Verfahren kann dadurch ergänzt werden, daß in der Entgasungsstation kurzfristig eine Atmosphäre erzeugt wird, die bis zu 99,9 Vol% N₂ enthält. Die hierzu in die Entgasungsstation eingeführten N₂-haltigen Gase können ähnlich den CO₂-haltigen Gasen so eingeführt werden, daß sie den gemahlenen Kaffee durchspülen. Bei Zufuhr von N₂ läßt sich eine Beschleunigung des Abgasens des gemahlenen Kaffees feststellen. Sie erfolgt bevorzugt vor der Spülung mit den CO₂-haltigen Gasen. Die erforderliche Verweilzeit des gemahlenen Kaffees in der Entgasungsstation kann so weiter reduziert werden.

Zur Erklärung des durch die Spülung mit CO₂-haltigen Gasen hervorgerufenen Effekts wird vermutet, daß das in Verbindung mit H₂O sauer wirkende CO₂ zellwand- oder porenschließend wirkt, so daß in den Kaffekörnern eingeschlossene Gase und Aromastoffe nicht mehr entweichen können. Hingegen wird vermutet, daß N₂ - ebenfalls insbesondere in Verbindung mit H₂O - die Zellwände des gemahlenen Kaffees durchlässig macht, was die Beschleunigung des Abgasens erklären kann. Ferner wird angenommen, daß sich CO₂ relativ stark an die Kaffeekörner anlagern kann, so daß der Sauerstoffzutritt und die damit einhergehende Kaffeealterung unterbunden werden kann. Es hat sich gezeigt, daß die im gemahlenen Kaffee ohnehin enthaltene Feuchtigkeit in jedem Fall ausreicht, um die vorbeschriebenen Effekte auftreten zu lassen.

Das CO₂ braucht man nicht oder nur teilweise einer gesonderten Quelle zu entnehmen. Dementsprechend ist das Verfahren bevorzugt dadurch gekennzeichnet, daß die CO₂-haltigen Gase wenigstens teilweise Abgasen entnommen werden, die in der Mahlstation und/oder in der Entgasungsstation vom Kaffee freigesetzt werden. Zum einen gehen auf diese Weise die freigesetzten Aromastoffe nicht verloren, zum anderen erhält man nahezu kostenlos geliefertes CO₂. Die Abgase können in einer Aufbereitungsstation komprimiert und gespeichert werden. Die Komprimierung erlaubt es, mit Leitungen geringen Querschnitts auszukommen. Mit den in der Aufbereitungsstation gespeicherten Abgasen werden bevorzugt die Entgasungsstation, ein der Mahlstation vorgeschalteter, geröstete Kaffeebohnen enthaltender Aufgabenbehälter sowie die Verpackungsstation beschickt, gegebenenfalls auch die Mahlstation und die einzelne Stationen miteinander verbindenden Förderstrecken. Die gespeicherten Abgase können nicht nur zum erfindungsgemäßen Spülen des gemahlenen Kaffees verwendet werden, sondern auch zur Erzeugung und Aufrechterhaltung der sauerstoffarmen Atmosphäre.

In der Regel umfaßt die Entgasungsstation mindestens einen Entgasungsbehälter, in dem der gemahlene Kaffee verweilt. Zum Spülen des gemahlenen Kaffees wird zumindest ein Teil der CO₂-haltigen Gase bevorzugt unterhalb der Füllstandshöhe des Entgasungsbehälters in diesen eingeleitet. Eine wenigstens zum Teil aufwärts gerichtete Strömungsrichtung der CO₂-haltigen Gase kann den in dem Entgasungsbehälter lagernden Mahlkaffee auflockern und so eine gleichmäßige Durchströmung begünstigen. Ein wesentlicher Gedanke der Erfindung, für den auch selbständiger Schutz beansprucht wird, ist darin zu sehen, daß zumindest ein Teil der CO₂-haltigen Gase über den Umfang des Entgasungsbehälters verteilt in diesen eingeleitet wird, insbesondere in Form einer ringartig geschlossenen Gasströmung. Hierdurch kann eine ringsum gleichmäßige Durchspülung des gemahlenen Kaffees mit einer örtlich wie zeitlich im wesentlichen gleichmäßigen, d.h. laminaren, Gasströmung erreicht werden. Als besonders günstig hat sich eine mittlere Strömungsgeschwindigkeit der CO₂-haltigen Gase in der Größenordnung von etwa 0,01 m/sec herausgestellt.

Für den Fall, daß von dem gemahlenen Kaffee freigesetzte Abgase zumindest teilweise in einer Aufbereitungsstation komprimiert und gespeichert werden, wird vorgeschlagen, daß die CO₂-haltigen Gase, die zum Spülen des gemahlenen Kaffees verwendet werden, in einem Kreislauf zwischen der Entgasungsstation und der Aufbereitungsstation geführt werden. Es kann dann im wesentlichen unabhängig von Schwankungen der gesammelten und aufbereiteten Abgasmenge ein konstanter Durchsatz der CO₂-haltigen Gase sichergestellt werden.

Die Erfindung betrifft ferner eine Einrichtung zur Behandlung vom geröstetem, gemahlenem Kaffee mit einem von einer Mahlstation über eine Entgasungsstation zu einer Verpackungsstation führenden, im wesentlichen gasdicht, insbesondere CO₂-dicht umschlossenen Förderweg und mit einem mindestens einen Gaseinlaß aufweisenden Entgasungsbehälter in der Entgasungsstation. Die Einrichtung soll insbesondere zur Durchführung des Verfahrens der vorstehend beschriebenen Art geeignet sein. Erfindungsgemäß ist vorgesehen, daß der Gaseinlaß in einem unteren Teilbereich des Entgasungsbehälters einen über dessen Umfang verteilten Einlaßquerschnitt aufweist. Diese Maßnahme trägt wesentlich dazu bei, bei Spülen in dem Entgasungsbehälter lagernden, gemahlenen Kaffees mit CO₂-haltigen Gasen den eingangs beschriebenen Effekt der weitestgehenden Unterdrückung des Abgasungsverhaltens zu erhalten. Durch die am Umfang verteilt einströmenden Gase gelingt es, den gemahlenen Kaffee gleichmäßig und vollständig zu durchspülen.

Bevorzugt umfaßt der Gaseinlaß mindestens eine Verteilerkammer, die über eine gasdurchlässige Trennwand mit dem Behälterinneren in Verbindung steht. Die Trennwand wird zweckmäßigerweise aus einem porösen Material, insbesondere einem Sintermetall oder einem Drahtgewebe-Laminat, gebildet sein. Eine solche Konstruktion ermöglicht über große Flächen eine Gasströmung mit gleichmäßigem Durchsatz und gleichmäßiger Strömungsgeschwindigkeit. Die Verteilerkammer sorgt für einen gleichmäßigen Gasdruck über den Einlaßquerschnitt, so daß eine nahezu laminare Strömung entsteht.

Bei einer bevorzugten Ausführungsform ist eine Verteilerkammer als den Entgasungsbehälter umschließende Ringkammer ausgebildet, wobei die Ringkammer gleichmäßig auf im wesentlichen ihrem gesamten Ringbereich mit dem Behälterinneren in Verbindung steht oder/und in mehrere, in gleichen Abständen über den Behälterumfang verteilte Düsen mündet. Des weiteren können der Entgasungsbehälter nach unten hin zu einem Trichter verjüngt und der Gaseinlaß zumindest teilweise im Bereich des Trichters an der Behälterwand oder/und am Trichterauslauf in allseitigem Abstand von der Behälterwand vorgesehen sein. Beste Ergebnisse wurden erzielt, wenn sowohl im Bereich des Trichters als auch am Trichterauslauf CO₂-haltige Gase einströmten.

Ausführungsbeispiele der Erfindung werden im folgenden anhand der beigefügten Zeichnungen näher erläutert. Es stellen dar:
Fig. 1 schematisch eine Anlage zur Durchführung des erfindungsgemäßen Verfahrens,
Fig. 2 schematisch eine Ausführungsform eines Entgasungsbehälters in der Entgasungsstation nach Fig. 1,
Fig. 3 vergrößert den Bereich III in Fig. 2,
Fig. 4 einen Schnitt durch eine weitere Ausführungsform eines Entgasungsbehälters und
Fig. 5 eine experimentell ermittelte Graphik, die die Unterdrückung des Abgasungsverhaltens bei Anwendung des erfindungsgemäßen Verfahrens verdeutlicht.

Der geröstete, noch nicht gemahlene, also in Form von gerösteten Bohnen vorliegende Kaffee wird über eine Leitung 3 einem Aufgabenbehälter 2 zugeführt und über eine Leitung 5 dem Aufgabenbehälter 2 entnommen und einer Mühle 4 zugeführt. Die Mühle 4 kann zum Beispiel als Walzen- oder Scheibenmühle ausgeführt sein. Der gemahlene Kaffee gelangt aus der Mühle 4 auf einem ersten Förderweg 6, in dem sich ein Saugimpuls-Förderer 8 befindet, zu einem Entgasungsbehälter 10 und von dort über einen zweiten Förderweg 12, in dem sich ein zweiter Saugimpuls-Förderer 14 und ein Sammelbehälter 16 befinden, zu einer Verpackungsmaschine 18.

Aus der Mühle 4 und dem Entgasungsbehälter 10 wird über Leitungen 22, 24 CO₂-haltiges Abgas abgeführt und über eine Sammelleitung 26 einer Aufbereitungsstation 28 zugeführt, in der die Abgase komprimiert und gespeichert werden. Aufbereitete CO₂-haltige Abgase können von der Aufbereitungsstation 28 über eine Leitung 30 dem Entgasungsbehälter 10, über eine Leitung 32 der Verpackungsmaschine 18 und über eine Leitung 38 dem Aufgabenbehälter zugeführt werden. Die im Aufgabenbehälter 2 und in der Verpackungsmaschine 18 entstehenden Abgase werden nicht der Aufbereitung zugeführt und treten über eine Leitung 7 aus dem Aufgabenbehälter 2 und über eine Leitung 34 aus der Verpackungsmaschine 18 aus. Die fertigen Kaffeepackungen werden auf einem Förderweg 36 abgeführt.

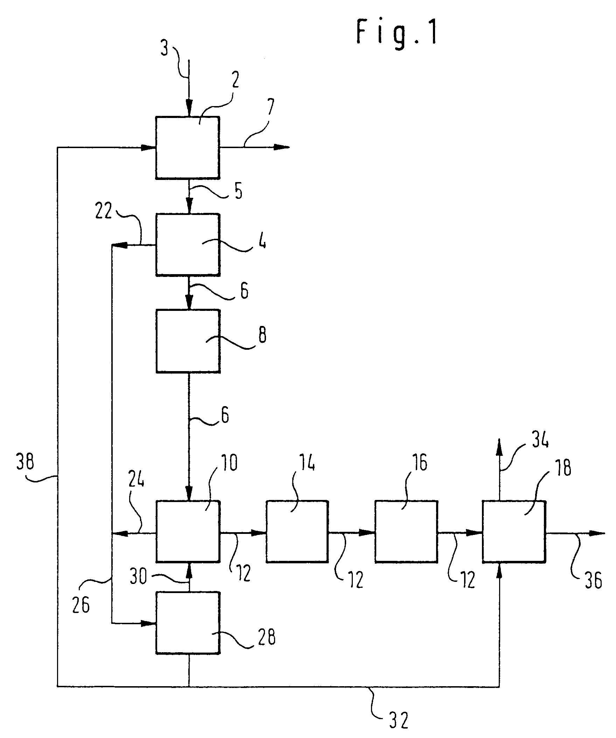

Eine Gesamtbilanz der in Fig. 1 gezeigten Anlage kann wie folgt aussehen: Der Mühle 4 werden drei Volumeneinheiten Abgas über die Leitung 22 und dem Entgasungsbehälter 10 zwei Volumeneinheiten Abgas über die Leitung 24 entnommen, so daß der Aufbereitungsstation 28 fünf Volumeneinheiten Abgas über die Leitung 26 zugeführt werden. Von dort gelangt eine Volumeneinheit über die Leitung 30 zurück in die Entgasungsstation 10 - insoweit besteht also ein Kreislauf - und vier Volumeneinheiten werden aus der Aufbereitungsstation 28 abgeführt. Von diesen vier Volumeneinheiten gelangen eine Volumeneinheit über die Leitung 38 in den Behälter 2 und drei Volumeneinheiten über die Leitung 32 in die Verpackungsmaschine 18. Dies ist nur ein Beispiel, erläutert aber die vorzugsweise in Betracht kommenden Größenordnungen.

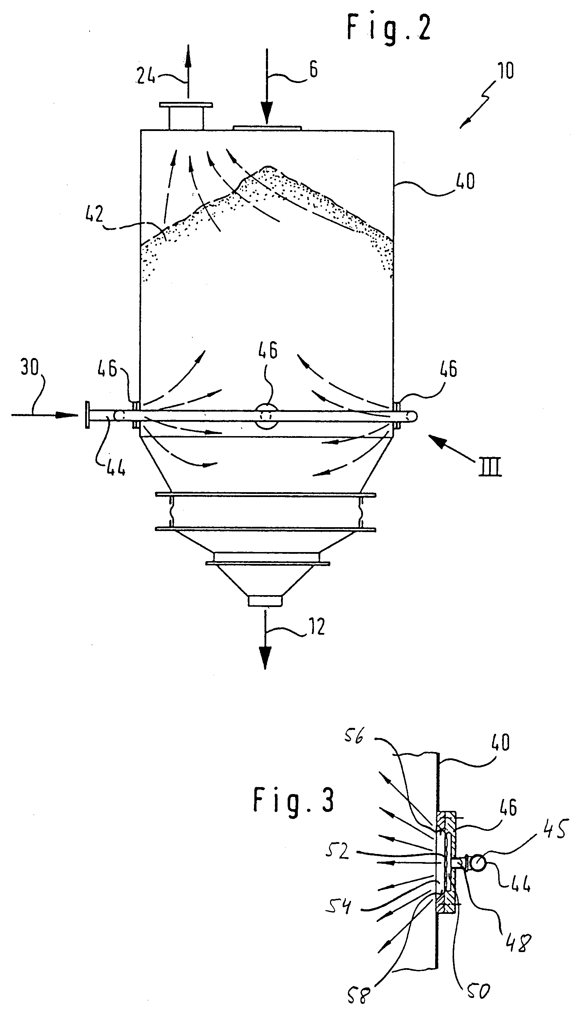

In der Entgasungsstation 10 befindet sich ein Behälter 40, in dem der gemahlene Kaffee 42 lagert. Mit dem in einem Kreislauf geführten Anteil der in der Aufbereitungsstation 28 gespeicherten CO₂-haltigen Abgase wird der gemahlene Kaffee 42 durchspült. Hierzu mündet die die CO₂-haltigen Gase zuführende Leitung 30 in eine den Behälter 40 im unteren Bereich umschließende, von einer Ringleitung 44 gebildete Verteilerkammer 45, von der aus die CO₂-haltigen Gase in den Innenraum des Behälters 40 gelangen. Bei dem Ausführungsbeispiel der Fig. 2 und 3 sind rund um den Behälter 40 verteilt vier Düsen 46 angeordnet, die über Verbindungskanäle 48 mit der Ringkammer 45 verbunden sind. Jede Düse 46 umfaßt eine an den Verbindungskanal 48 anschließende Sammelkammer 50, die durch eine Trennwand 52 vom Innenraum des Behälters 40 getrennt ist. Die Trennwand 52 ist bevorzugt von einem Plättchen aus Sintermetall oder einem mehrschichtigen Drahtgewebe gebildet, so daß sie über ihre gesamte Fläche im wesentlichen gleichmäßig gasdurchlässig ist. Die Sammelkammer 50 bewirkt einen gleichmäßigen Gasdruck an jeder Stelle der Trennwand 52, was eine sehr gleichmäßige Gasströmung hervorruft. Wie insbesondere in Fig. 3 zu erkennen ist, weisen die Düsen 46 eine trichterförmige Mündungsöffnung 54 auf, deren schräg verlaufende Begrenzungsflächen 56 und 58 für eine breite Streuung der in den Behälter 40 einströmenden Gase sorgen. Insbesondere der aufwärts gerichtete Anteil der einströmenden Gase lockert den gemahlenen Kaffee auf und erleichtert so dessen gleichmäßige Durchspülung.

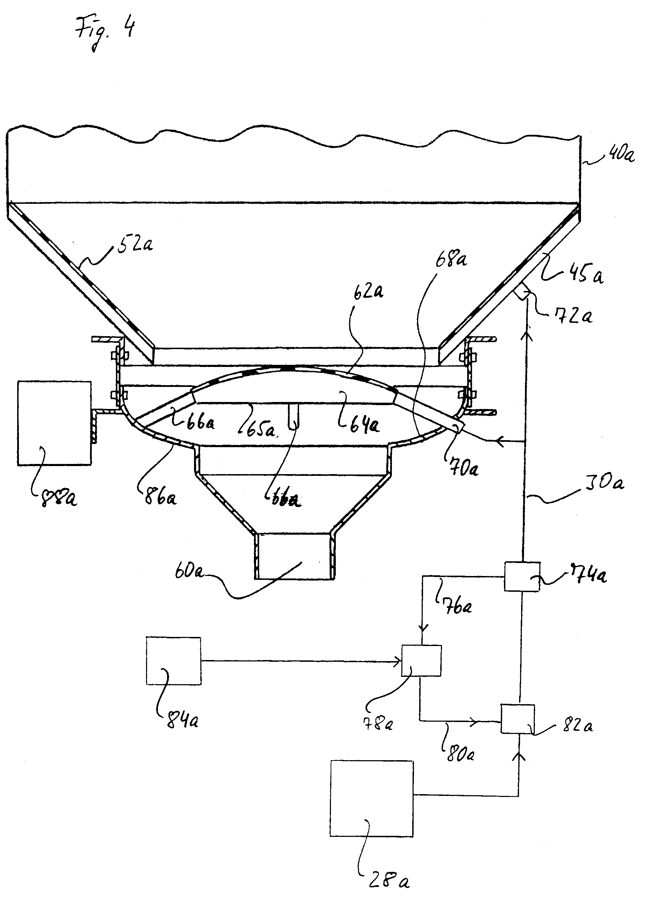

Bei dem Ausführungsbeispiel der Fig. 4 sind gleichwirkende Komponenten wie in den Fig. 1 bis 3 mit gleichen Bezugszeichen versehen, jedoch ergänzt um einen Kleinbuchstaben. Es ist dort ein Behälter 40a dargestellt, der zu seinem Auslauf 60a hin trichterartig verjüngt ist. Dies unterscheidet ihn im wesentlichen nicht von dem Behälter 40 der Fig. 2 und 3. Allerdings ist der zuvor von den vier Düsen 46 gebildete Gaseinlaß nunmehr zum Teil im Bereich der trichterförmigen Verjüngung und zum Teil direkt über dem Auslauf 60a vorgesehen. Die ringförmige Verteilerkammer 45a wird hier unmittelbar durch eine Trennwand 52a begrenzt, die sich ringartig über den gesamten Umfang des Behälters 40a erstreckt. Sie besteht wiederum aus einem Sintermetall oder einem Drahtgewebe und sorgt durch ihre Schrägstellung für eine größtenteils aufwärts gerichtete, ringförmig geschlossene Gasströmung. Die sich ausbildende Gasströmung ist dabei äußerst gleichmäßig und kann als laminar bezeichnet werden.

Der Gaseinlaß umfaßt ferner eine mittig über dem Auslauf 60a angeordnete Verteilerkammer 64a. Sie ist von einem kreisrunden Boden 65a und einem auf den Boden 65a aufgesetzten, konvex gewölbten Deckel 62a begrenzt, welcher eine gasdurchlässige Trennwand der Verteilerkammer 64a bildet. Das Gebilde aus Boden 65a und Deckel 62a ist durch mehrere sternförmig angeordnete Haltearme 66a ringsum im Abstand von der Behälterwand 68a des Behälters 40a gehalten. Einer der Haltearme 66a weist eine an die Leitung 30a angeschlossene Zuführung 70a für die CO₂-haltigen Gase auf. Auch die Verteilerkammer 45a ist über einen Anschluß 72a mit der Leitung 30a verbunden.

Das pro Zeiteinheit durch die Leitung 30a strömende Gasvolumen wird mittels eines Durchflußmessers 74a gemessen, welcher über eine Signalleitung 76a ein entsprechendes Meßsignal an einen Regler 78a liefert. Der Regler 78a vergleicht das Meßsignal mit einem Durchsatz-Sollwert und liefert auf einer Signalleitung 80a ein der Regelabweichung entsprechendes Stellsignal an ein Stellglied 82a, das den Gasdurchsatz durch die Leitung 30a auf den Durchsatz-Sollwert einstellt. Letzterer kann dem Regler 78a beispielsweise durch eine Prozeßsteuerungseinrichtung 84a vorgegeben werden, kann jedoch auch manuell einstellbar sein.

Im Bereich des unteren Trichterendes nahe des Auslaufs 60a ist die Behälterwand 68a von einem Vibrationsboden 86a gebildet, der zur Vermeidung sich oberhalb des Auslaufs 60a bildender Materialbrücken mittels einer Rütteleinrichtung 88a in Schwingungen versetzbar ist.

Nachzutragen ist noch, daß alternativ zu der in Figur 1 gezeigten, gemischt vertikal-horizontalen Anordnung der einzelnen Stationen und Förderstrecken auch eine rein horinzontale oder auch eine rein vertikale Anordnung zur Anwendung kommen kann.

Die bevorzugt einzuhaltenden Verfahrensparameter sind eingangs beschrieben.

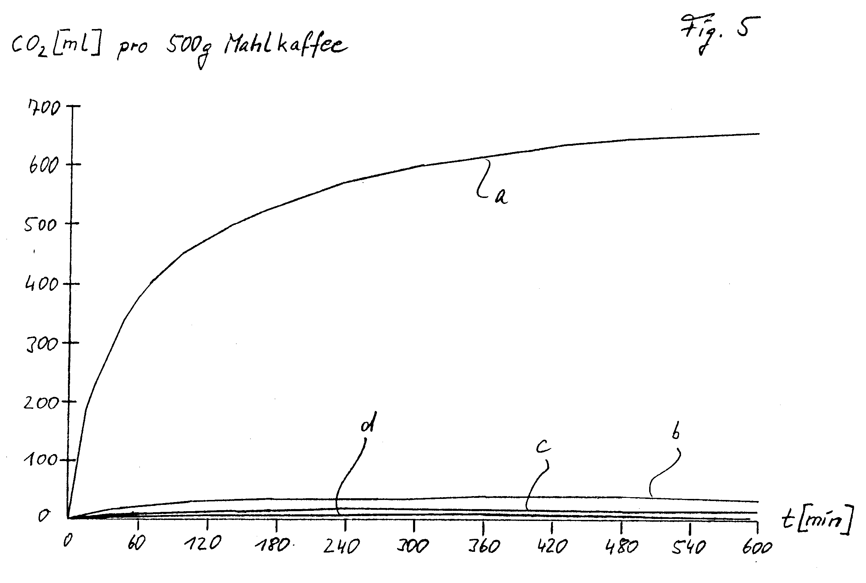

Im Rahmen einer Untersuchung wurden Ergebnisse erhalten, die in Fig. 5 dargestellt sind und die Wirkung der erfindungsgemäßen Spülbehandlung deutlich zu Tage treten lassen. In einer ersten Versuchsreihe wurde eine Kaffeemischung dunkel geröstet, anschließend filterfein gemahlen und dann ohne jegliche weitere Behandlung sofort in eine Meßapparatur eingebracht. Dort wurde nach einer Zeit von t = 600 min (also 10 Stunden) bereits eine Abgasmenge von deutlich über 600 ml CO₂ pro 500 g Mahlkaffee festgestellt. Die entsprechende Meßkurve ist in Fig. 5 mit *a* bezeichnet. Man erkennt, daß die Kurve nach 600 min noch nicht in die Horizontale übergegangen ist, was bedeutet, daß der Kaffee noch nicht vollständig abgegast ist. Letztendlich ergab sich bei dieser Versuchsreihe eine erforderliche Abgasungszeit von 16 Stunden.

In 3 weiteren Versuchsreihen wurde die gleiche Kaffeemischung in gleicher Weise geröstet und gemahlen, anschließend jedoch unterschiedlich lange und mit unterschiedlichem Durchsatz mit kaffeeigenem CO₂ gespült. In allen Fällen trat der Effekt des weitestgehenden Abgasungsstopps und somit einer erheblichen Gasrückhaltung ein. Erst nach intensiver Behandlung mit N₂ oder Luft konnte die Abgasung wieder in Gang gesetzt werden. Die Meßkurve *b* in Fig. 5 zeigt eine Versuchsreihe, bei der der gemahlene Kaffe 15 Minuten lang mit 0,2 l/min CO₂ gespült wurde. Die Meßkurve *c* ergab sich nach einer zweistündigen Spülbehandlung mit 0,5 l/min CO₂, die Meßkurve *d* nach einer sechsstündigen Spülbehandlung mit 1 l/min CO₂. Es läßt sich leicht erkennen, daß die Abgasung bereits nach relativ kurzer Zeit, spätestens jedoch nach etwa 3 Stunden, stoppte, wobei die abgegebene Abgasmenge deutlich unter 100 ml je 500 g Mahlkaffee lag. Diese Ergebnisse zeigen auf deutliche Weise die erhebliche Reduzierung der Menge der freigesetzten Abgase.

Unabhängig von den soeben beschriebenen Ausführungsbeispielen ist noch nachzutragen, daß die Zusammensetzung der zur erfindungsgemäßen Spülbehandlung des gemahlenen Kaffees benutzten CO₂-haltigen Gase bevorzugt dergestalt ist, daß zumindest ein wesentlicher, insbesondere der überwiegende Teil dieser Gase CO₂ ist. Beispielsweise kann der CO₂-Anteil bei etwa 90% oder mehr liegen. In weiteren Anteilen können neben aromatisierten, kaffeeigenen Gasen auch CO, N₂, H₂O u.a. vorhanden sein.

## Patentansprüche

1. Verfahren zur Behandlung von geröstetem, gemahlenem Kaffee, der in einer sauerstoffarmen Atmosphäre von einer Mahlstation (4) über eine Entgasungsstation (10) zu einer Verpackungsstation (16, 18) gefördert und dort portionsweise im wesentlichen luftdicht verpackt wird,
**dadurch gekennzeichnet,**
daß der gemahlene Kaffee in der Entgasungsstation (10) mit CO₂-haltigen Gasen gespült wird, welche mit einem vorbestimmten zeitbezogenen Volumen in die Entgasungsstation (10) eingeführt werden.

2. Verfahren nach Anspruch 1,
dadurch gekennzeichnet,
daß der gemahlene Kaffee eine vorbestimmte Zeit lang, insbesondere während zumindest eines großen Teils seiner Verweildauer in der Entgasungstation (10), mit CO₂-haltigen Gasen gespült wird und daß das vorbestimmte zeitbezogene Volumen der CO₂-haltigen Gase zeitlich im wesentlichen konstant ist.

3. Verfahren nach Anspruch 1 oder 2,
dadurch gekennzeichnet,
daß der gemahlene Kaffee weniger als 6 Stunden lang, besser weniger als 2 Stunden lang, noch besser weniger als 0,25 Stunden lang, mit CO₂-haltigen Gasen gespült wird.

4. Verfahren nach einem der Ansprüche 1 - 3,
dadurch gekennzeichnet,
daß das vorbestimmte zeitbezogene Volumen der CO₂-haltigen Gase im Bereich von 0,05 l/min bis 2 l/min, vorzugsweise von 0,2 l/min bis 1 l/min, je Kilogramm des in der Entgasungsstation (10) verweilenden gemahlenen Kaffees liegt und auf seinen vorbestimmten Wert hin insbesondere kontinuierlich geregelt wird.

5. Verfahren nach einem der Ansprüche 1 - 4,
dadurch gekennzeichnet,
daß die CO₂-haltigen Gase wenigstens teilweise Abgasen entnommen werden, die in der Mahlstation (4) und/oder in der Entgasungsstation (10) vom Kaffee freigesetzt werden.

6. Verfahren nach einem der Ansprüche 1 - 5, bei dem der gemahlene Kaffe in der Entgasungsstation (10) in einem Entgasungsbehälter (40) verweilt,
dadurch gekennzeichnet,
daß zumindest ein Teil der CO₂-haltigen Gase unterhalb der Füllstandshöhe des Entgasungsbehälters (40) in diesen eingeleitet wird, vorzugsweise mit wenigstens zum Teil aufwärts gerichteter Strömungsrichtung.

7. Verfahren nach Anspruch 6,
dadurch gekennzeichnet,
daß zumindest ein Teil der CO₂-haltigen Gase über den Umfang des Entgasungsbehälters verteilt in diesen eingeleitet wird, insbesondere in Form einer ringartig geschlossenen Gasströmung.

8. Verfahren nach einem der Ansprüche 1 - 7,
dadurch gekennzeichnet,
daß die CO₂-haltigen Gase mit einer mittleren Strömungsgeschwindigkeit in der Größenordnung von etwa 0,01 m/sec eingeführt werden.

9. Verfahren nach einem der Ansprüche 1 - 8, bei dem Abgase, die von dem gemahlenen Kaffee freigesetzt werden, zumindest teilweise in einer Aufbereitungsstation (28) komprimiert und gespeichert werden,
dadurch gekennzeichnet,
daß die CO₂-haltigen Gase in einem Kreislauf zwischen der Entgasungsstation (10) und der Aufbereitungsstation (28) geführt werden.

10. Verfahren zur Behandlung von geröstetem, gemahlenem Kaffee, der in einer sauerstoffarmen Atmosphäre von einer Mahlstation (4) über eine Entgasungsstation (10) zu einer Verpackungsstation (16, 18) gefördert und dort portionsweise im wesentlichen luftdicht verpackt wird,
**dadurch gekennzeichnet,**
daß in einem unteren Teilbereich eines Entgasungsbehälters (40), in dem der gemahlene Kaffee in der Entgasungsstation (10) verweilt, CO₂-haltige Gase über den Umfang des Entgasungsbehälters (40) verteilt in diesen eingeleitet werden, gewünschtenfalls in Verbindung mit weiteren Merkmalen eines der Ansprüche 1 bis 9.

11. Einrichtung zur Behandlung von geröstetem, gemahlenem Kaffee mit einem von einer Mahlstation (4) über eine Entgasungsstation zu einer Verpackungsstation (16, 18) führenden, im wesentlichen gasdicht, insbesondere CO₂-dicht umschlossenen Förderweg und mit einem mindestens einen Gaseinlaß (45, 46; 45a, 52a, 62a, 64a) aufweisenden Entgasungsbehälter (40; 40a) in der Entgasungsstation (10), insbesondere zur Durchführung mindestens eines der Verfahren nach einem der Ansprüche 1 bis 10,
**dadurch gekennzeichnet,**
daß der Gaseinlaß (45, 46; 45a, 52a, 62a, 64a) in einem unteren Teilbereich des Entgasungsbehälters (40; 40a) einen über dessen Umfang verteilten Einlaßquerschnitt aufweist.

12. Einrichtung nach Anspruch 11,
dadurch gekennzeichnet,
daß der Gaseinlaß (45, 46; 45a, 52a, 62a, 64a) mindestens eine Verteilerkammer (45; 45a, 64a) umfaßt, die über eine gasdurchlässige Trennwand (52; 52a, 62a) mit dem Behälterinneren in Verbindung steht, wobei die Trennwand (52; 52a, 62a) bevorzugt von einem porösen Material, insbesondere einem Sintermetall oder einem Drahtgewebe-Laminat, gebildet ist.

13. Einrichtung nach Anspruch 12,
dadurch gekennzeichnet,
daß eine Verteilerkammer (45; 45a) als den Entgasungsbehälter (40; 40a) umschließende Ringkammer ausgebildet ist und daß die Ringkammer (45a) gleichmäßig auf im wesentlichen ihrem gesamten Ringbereich mit dem Behälterinneren in Verbindung steht oder/und die Ringkammer (45) in mehrere, in gleichen Abständen über den Behälterumfang verteilte Düsen (46) mündet.

14. Einrichtung nach einem der Ansprüche 11 - 13,
dadurch gekennzeichnet,
daß der Entgasungsbehälter (40a) nach unten hin zu einem Trichter verjüngt ist und daß der Gaseinlaß (45a, 52a, 62a, 64a) zumindest teilweise im Bereich des Trichters an der Behälterwand (68a) oder/und am Trichterauslauf (60a) in allseitigem Abstand von der Behälterwand (68a) vorgesehen ist.
